# EUROPEAN PATENT SPECIFICATION

(11) **EP 1 482 211 B1**
(45) Date of publication and mention of the grant of the patent: **18.04.2007**
(21) Application number: 04011800.2
(22) Date of filing: 18.05.2004
(51) Int. Cl.: F16H 48/28, F16H 55/08

(54) **Worm wheel of differential gearing for vehicle**
Schneckenrad für ein Differential eines Fahrzeuges
Roue à vis de différentiel pour véhicule

(30) Priority: 20.05.2003 JP 2003142021
(43) Date of publication of application: 01.12.2004
(73) Proprietor: JTEKT CORPORATION, Chuo-ku, Osaka (JP)
(72) Inventor: Nakajima, Sinichiro, c/o JTEKT CORPORATION, Chuo-ku, Osaka (JP)
(74) Representative: HOFFMANN EITLE

(56) References cited:
- US-A- 1 613 702
- US-A- 2 022 141
- US-A- 2 859 641
- US-A- 3 849 862

## Description

The present invention relates to an element gear of a differential gearing for vehicle, and in particular, to the configuration of spur gears formed on the opposite ends of the element gear.

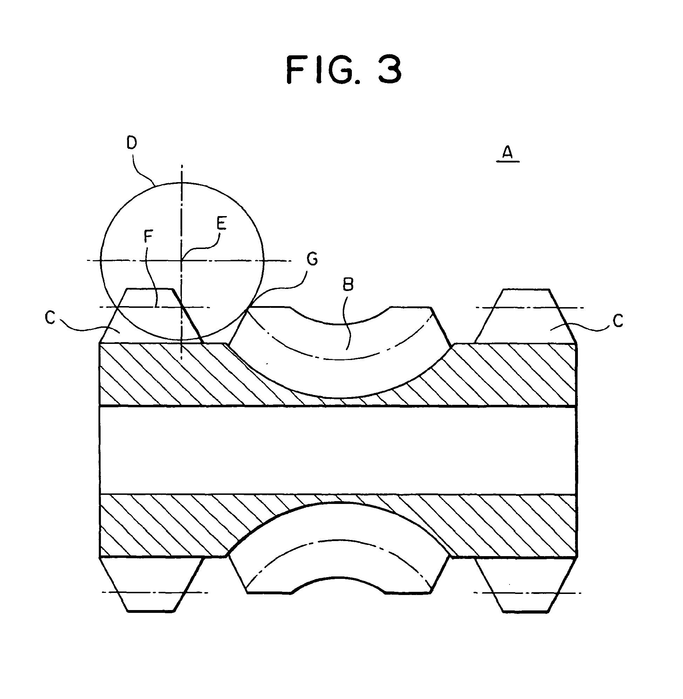

Fig. 3 is a longitudinal section of a conventional element gear of a differential gearing for vehicle. The differential gearing includes an element gear A which is centrally formed with a spool gear B that meshes with side gears directly coupled to left and right wheels and which is formed with spur gears C at its opposite ends. A pair of element gears A, A are disposed in parallel relationship in the differential gearing for vehicle, and the spool gears B, B located centrally on the both element gears A, A mesh with left and right side gears while the spur gears C, C located on the opposite ends are in meshing engagement with each other.

The spur gear C of the element gear A has been formed by a shaping operation in the prior art practice, but because the shaping operation requires a length of time, a hobbing operation is recently used to shape it. In order for a normal meshing engagement between the spur gears C of the element gears A to be achieved, the center E of a hobbing tool D must move through a position where a face width measured at the pitch circle F of the spur gear C is exceeded. However, the feed of the tool D is limited by a point G of interference with the spool gear B, and accordingly, a sufficient width of the spur gear C could not have been secured.

In the conventional element gear A of the differential gearing for vehicle as mentioned above, the construction is such that the spool gear B is formed centrally on the element gear A and the spur gears C are formed on the opposite sides thereof, and accordingly, a satisfactory face width cannot be secured for the spur gear C if the hobbing operation is chosen to shape it, presenting a difficult in assuring a satisfactory strength.

US-A-3,849,862 discloses a differential gear mechanism in which the gear complexes have balancing gears 15 at opposite ends, the teeth of the balancing gears having curved inner faces so as to have wider roots on the inside faces. Because the teeth of the balancing gears are formed at a diameter substantially outside the outer diameter of a centrally-located worm wheel 14, and spaced apart therefrom longitudinally, no interference with the worm wheel 14 occurs when balancing gears 15 are machined. However, size and weight is increased by this arrangement of the gear complexes.

According to a first aspect of the present invention, there is provided an element gear of a differential gearing for a vehicle, the element gear including a spool gear which is centrally located and spur gears which are located on the opposite ends thereof, wherein each spur gear has a/n increased face width in a region located below the pitch circle of the spur gear, and characterised in that each spur gear has an imperfect gear region in the increased face width region that is created by a hobbing operation when the spur gear is machined.

In the element gear of a differential gearing for vehicle according to the present invention, the face width of the spur gear is increased in a region located below the pitch circle, and accordingly, the strength of the gear can be increased without changing the overall size of the gear. Therefore, it is an advantage of the present invention to provide an element gear of a differential gearing for vehicle which allows the strength of a spur gear to be improved. In addition, even though making the increased size area results in an imperfect gear region, such region has no influence upon the meshing engagement, presenting no problem whatsoever.

According to a second aspect of the present invention, there is provided a method of manufacturing an element gear that includes a spool gear which is centrally located and spur gears which are located on the opposite ends thereof, the method comprising: machining spur gears at opposite ends of the element gear by hobbing operation so as to create imperfect gear regions in increased face width regions of the spur gears, below the pitch circle of each spur gear.

To enable a better understanding of the present invention, and to show how the same may be carried into effect, reference will now be made, by way of example only, to the accompanying drawings, in which:-
Fig. 1 is a longitudinal section of an element gear of a differential gearing for vehicle according to one embodiment of the invention;
Fig. 2 is a longitudinal section of the differential gearing including the element gear of Fig. 1; and
Fig. 3 is a longitudinal section of a conventional element gear of a differential gearing for vehicle.

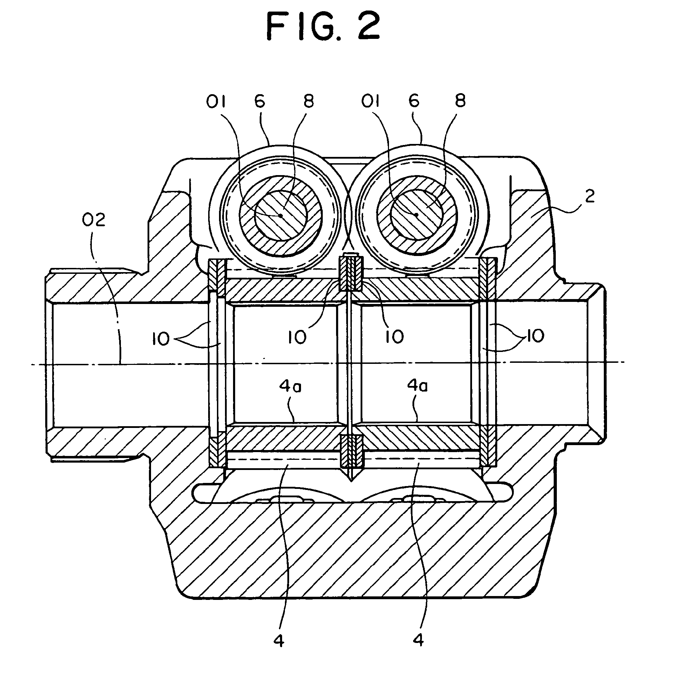

A differential gearing for vehicle of the type shown in Fig. 2 is well known in the art, and therefore will be briefly described. A pair of left and right side gears 4, 4 are rotatably received in a housing 2, and are formed with splines 4a, 4a around their inner periphery, which are coupled with both side shafts, not shown, to be connected to left and right drive wheels.

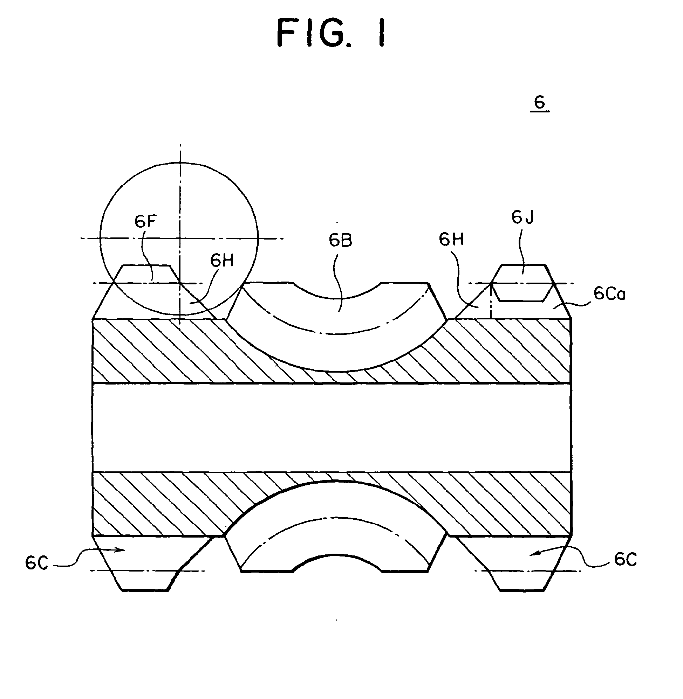

The side gears 4, 4 are in meshing engagement with a pair of element gears 6,6 which are disposed tangentially of the side gears. The element gears 6,6 are rotatably supported by the housing 2 through journal pins 8, 8. As shown in Fig. 1, the pair of element gears 6, 6 which are in meshing engagement with the both side gears 4,4 have spool gears 6B centrally formed thereon, which are in meshing engagement with the side gears 4, 4 comprising worms. In addition, spur gears 6C which are formed on the opposite sides of the spool gears 6B are in meshing engagement with the spur gears of the other element gear in each pair, causing the pairs of element gears 6, 6 to rotate in opposite directions to each other. Generally, three pairs of element gears 6, 6 are disposed around the side gears 4, 4 at an equal interval, but it should be understood that the number of pairs is not limited to three pairs.

Washers 10 are interposed between the two side gears 4, 4 which are disposed in tandem within the housing 2 and also between each side gear 4 and the housing 2.

With the differential gearing for vehicle constructed in the manner mentioned above, a drive from an engine is input from outside to the housing 2 to rotate it. When a vehicle is running straightforward on a flat road, both left and right drive wheels are rotating in an identical manner. The element gears 6,6 do not rotate about the axis 01 of the gear 6 itself, but only rotate about the axis 02 of the housing 2 and the side gear 4, thus transmitting the rotation of the housing 2 to the side gears 4,4. In other words, the side gears 4, 4 rotate integrally with the housing 2 and the element gears 6,6, whereby the engine torque is directly transmitted to the both side drive wheels.

During a differential operation as when cornering, the housing 2, the element gears 6,6 and the side gears 4,4 rotate about the axis 02 as a whole while the rotation of the element gears 6,6 about the axis 01 corrects for a differential rotation. Specifically, one of the element gears 6 rotates about its own axis in a direction to decelerate the side gear 4, while the other element gear 6 rotates about its own axis in a direction to accelerate the side gear 4, thus correcting for a differential rotation of the drive wheels.

When there is a difference in the coefficient of friction which left and right wheels experience from the road surface and results in a difference in the grip of the left and right drive wheels, a torque distribution (a limitation of the differential action) is provided. When one of the drive wheels increases in speed as by a slip, a braking action is applied to this drive wheel in a manner proportional to an input torque thereto while a drive equivalent to the braking torque is distributed to the other drive wheel which has a higher grip. To generate the braking torque, frictional forces developed at various parts are utilized. Specifically, the torque distribution takes place by using frictional forces developed at the meshing tooth faces between the both side gears 4,4 and the element gears 6,6, frictional surfaces between the opposing end faces of the both side gears 4, 4 and the washers 10, frictional surfaces between the end faces of the element gears 6, 6 and the housing 2, frictional surfaces between the element gear 6 and the journal pin 8, and the meshing parts of the spur gears 6C, 6C on the element gear 6,6.

As will be noted from Fig. 1, the element gear 6 of the present embodiment is different from the configuration of the conventional element gear A (see Fig. 3) in respect of the configuration of the tooth flank 6Ca of the spur gears 6C which are formed at the opposite ends. Specifically, for both spur gears 6C, each inside surface or the surface facing the centrally located spool gear 6B has a broadened angular portion for the tooth flank 6Ca which is located below the pitch circle 6F, thus increasing the face width of the tooth flank 6C. When the element gear 6 is configured in this manner, the strength of the spur gear 6C can be increased without changing the overall size.

As mentioned above, as one machines the spur gear 6C by hobbing operation for the element gear 6 configured with the spool gear 6B centrally located and with the spur gears 6C located on the opposite sides thereof, an interference with the centrally located spool gear 6B stands in the way to increasing the overall face width inclusive of the tooth crest. Accordingly, the face width of only the tooth flank is increased. If the face width of only the tooth flank 6Ca is increased, the hobbing operation results in creating an imperfect gear region 6H in an area extending from the pitch circle 6F to the tooth flank 6Ca, but because the region 6H has no interference with a meshing region 6J, this causes no problem whatsoever as far as the gear function is concerned.

## Claims

1. An element gear of a differential gearing for a vehicle, the element gear (6) including a spool gear (6B) which is centrally located and spur gears (6C) which are located on the opposite ends thereof, wherein
each spur gear has an increased face width in a region located below the pitch circle (6F) of the spur gear, and
**characterised in that**
each spur gear has an imperfect gear region (6H) in the increased face width region that is created by a hobbing operation when the spur gear is machined.

2. An element gear according to claim 1 in which the increased face width region is located below the pitch circle (6B) toward the spool gear (6B).

3. A method of manufacturing an element gear that includes a spool gear (6B) which is centrally located and spur gears (6C) which are located on the opposite ends thereof, the method comprising:
machining spur gears (6C) at opposite ends of the element gear (6) by hobbing operation so as to create imperfect gear regions (6H) in increased face width regions of the spur gears, below the pitch circle (6F) of each spur gear.

## Patentansprüche

1. Getriebeelement eines Differentialgetriebes für ein Fahrzeug, wobei das Getriebeelement (6) ein Spulenrad (6B), das mittig angeordnet ist, und Stirnräder (6C), die an den entgegengesetzten Enden davon angeordnet sind, enthält, bei dem
jedes Stirnrad eine vergrößerte Flächenbreite in einem Bereich, der unterhalb des Wälzkreises (6F) des Stirnrades angeordnet ist, aufweist, und **dadurch gekennzeichnet ist, dass**
jedes Stirnrad einen unvollständigen Radbereich (6H) in dem vergrößerten Flächenbreitenbereich aufweist, der durch eine Fräsbehandlung erzeugt wird, wenn das Stirnrad bearbeitet wird.

2. Getriebeelement nach Anspruch 1, bei dem der vergrößerte Flächenbreitenbereich unterhalb des Wälzkreises (6B) in Richtung des Spulenrades (6B) angeordnet ist.

3. Verfahren zur Herstellung eines Getriebeelements, das ein Spulenrad (6B), das zentral angeordnet ist, und Stirnräder (6C), die an den entgegengesetzten Enden davon angeordnet sind, enthält, wobei das Verfahren umfasst:
Bearbeiten von Stirnrädern (6C) an gegenüberliegenden Enden des Getriebeelements (6) durch eine Fräsbehandlung, so dass unvollständige Radbereiche (6H) in vergrößerten Flächenbreitenbereichen der Stirnräder unterhalb des Wälzkreises (6F) von jedem Stirnrad erzeugt werden.

## Revendications

1. Pignon élémentaire d'un engrenage différentiel pour un véhicule, le pignon élémentaire (6) incluant un pignon formant manchon (6B) qui est situé de manière centrale, et des pignons à denture droite (6C) qui sont situés sur les extrémités opposées de celui-ci, dans lequel
chaque pignon à denture droite a une largeur augmentée de la face dans une zone située au-dessous du cercle primitif (6F) du pignon à denture droite, et
**caractérisé en ce que**
chaque pignon à denture droite a une zone d'engrenage imparfait (6H) dans la zone à largeur augmentée de la face, qui est créée par une opération de fraisage à la vis-mère lors de l'usinage du pignon à denture droite.

2. Pignon élémentaire selon la revendication 1, dans lequel la zone à largeur augmentée de la face est située au-dessous du cercle primitif (6B) en direction du pignon formant manchon (6B).

3. Procédé de fabrication d'un pignon élémentaire, qui comprend un pignon formant manchon (6B) qui est situé de manière centrale, et des pignons à denture droite (6C) qui sont situés sur les extrémités opposées de celui-ci, le procédé comprenant :
l'usinage de pignons à denture droite (6C) à des extrémités opposées du pignon élémentaire (6) par une opération de fraisage à la vis-mère afin de créer des zones d'engrenage imparfait (6H) dans des zones à largeur augmentée de la face des pignons à denture droite, au-dessous du cercle primitif (6F) de chaque pignon à denture droite.
